# FASCICULE DE BREVET EUROPEEN

(11) **EP 2 019 937 B1**
(45) Date de publication et mention de la délivrance du brevet: **29.12.2010**
(21) Numéro de dépôt: 07766085.0
(22) Date de dépôt: 22.05.2007
(51) Int. Cl.: F16H 1/28, F16H 1/46

(54) **DISPOSITIF DE REDUCTION DU TYPE A TRAINS EPICYCLOÏDAUX IMBRIQUES**
REDUKTIONSGETRIEBEVORRICHTUNG MIT VERSCHACHTELTEM PLANETENGETRIEBE
REDUCTION GEARBOX DEVICE OF THE NESTED PLANETARY GEAR SET TYPE

(30) Priorité: 24.05.2006 FR 0651897
(43) Date de publication de la demande: 04.02.2009
(73) Titulaire: Valeo Embrayages, 80000 Amiens Cedex 1 (FR)
(72) Inventeur: DELEVALLEE, Jean-Louis, F-80000 Amiens (FR); MAUREL, Hervé, F-80000 Amiens (FR)
(74) Mandataire: Lemaire, Marc
(86) Numéro de dépôt international: PCT/FR2007/051312
(87) Numéro de publication internationale: WO 2007/135338

(56) Documents cités:
- EP-A1- 0 319 393
- EP-A1- 0 559 626
- WO-A-00/63588
- DE-A1- 10 255 909
- DE-U1- 29 802 533
- FR-A- 2 287 631
- US-A- 1 417 797
- US-A- 3 675 510
- US-A- 4 850 247
- US-A- 4 873 894
- US-A- 5 540 630
- US-A1- 2002 091 030
- US-A1- 2005 277 513

## Description

L'invention se rapporte à un dispositif de réduction du type à trains épicycloïdaux imbriqués, ou trains épicycloïdaux de type « Fernandez », tel que décrit dans l'ouvrage de référence Engrenages, par G. Henriot, édition DUNOD, page 534, §13.2.1.

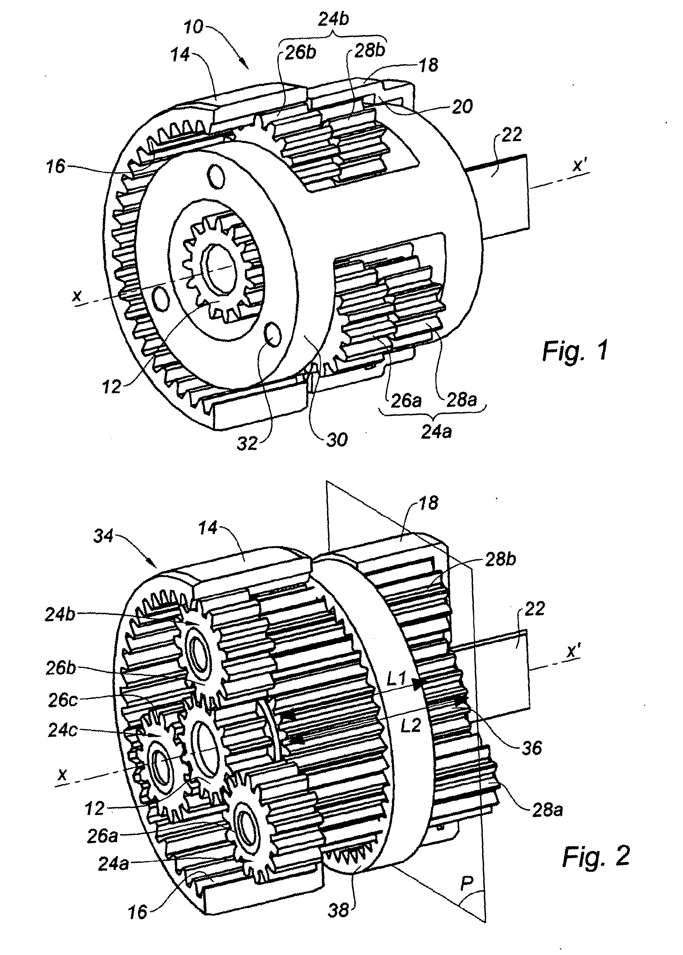

Comme cela est connu en soi, un tel dispositif de réduction 10 (voir figure 1) comprend notamment :
- un pignon d'entrée 12 apte à être entraîné en rotation autour de son axe x-x',
- une couronne fixe 14, coaxiale au pignon d'entrée 12 et qui présente sur sa face radialement interne une denture 16,
- une couronne de sortie 18 coaxiale au pignon d'entrée 12, qui présente sur sa face radialement interne une denture 20 et qui se prolonge, coaxialement et dans la direction opposée au pignon d'entrée 12, par un arbre de sortie 22,
- des satellites réalisés sous forme de pignons étagés 24 équirépartis circonférentiellement qui comportent une première et une seconde parties de denture 26, 28 de diamètres différents, la première partie de denture 26 étant en contact simultanément avec le pignon d'entrée 12 et la denture 16 de la couronne fixe 14, la seconde partie de denture 28 étant en contact avec la denture 20 de la couronne de sortie 18.

Le dispositif de réduction comporte également un porte satellites 30, coaxial au pignon d'entrée 12, sur lequel sont montés les tourillons 32 autour desquels les pignons étagés 24 sont entraînés en rotation.

Le document JP 2003130145 décrit un dispositif de réduction de ce type où le porte satellites est réalisé en deux parties et où les tourillons, autour desquels les pignons étagés sont entraînés en rotation, sont montés dans des encoches en « U » réalisées sur le porte satellites, permettant ainsi un montage depuis le côté. Le document EP-A-319393 décrit un dispositif selon le préambule de la revendication 1.

Un dispositif de réduction de ce type présente l'avantage de fournir une large gamme de réduction dans un encombrement réduit. Cependant il présente deux défauts principaux :
- les principaux efforts tangentiels de dentures, qui s'exercent sur les pignons étagés, créent un couple de basculement selon un axe radial et un axe orthoradial (l'axe orthoradial étant l'axe perpendiculaire à l'axe radial qui est compris dans le plan transversal). Ces efforts tendent à modifier les positions relatives des pignons étagés, c'est-à-dire la distance entre leurs axes respectifs et l'inclinaison entre ces axes. Il résulte de cette modification des positions relatives des pignons étagés une répartition non homogène des efforts de denture et donc, notamment, une usure localisée et du bruit en fonctionnement. Pour éviter ce défaut, il faut soigner particulièrement le jeu de guidage du pignon étagé, ainsi que la précision et la rigidité du porte satellites ;
- les principaux efforts s'exerçant sur les dentures des deux parties de denture des pignons étagés se cumulent, ce qui crée des efforts importants entre les tourillons et le porte satellites, et provoque une diminution du rendement global du dispositif de réduction. Ce défaut peut être évité par l'emploi de paliers performants ou de roulements, mais cela représente un supplément de coût et d'encombrement.

Un but de l'invention est d'améliorer les dispositifs de réduction du type à trains épicycloïdaux imbriqués connus et, notamment, d'améliorer le maintien des pignons étagés dans leurs positions relatives.

On atteint ce but de l'invention au moyen d'un dispositif selon la revendication 1.

Le dispositif comprend:
- un pignon d'entrée apte à être entraîné en rotation autour de son axe,
- une couronne fixe, coaxiale audit pignon d'entrée et qui présente sur sa face radialement interne une denture,
- une couronne de sortie coaxiale audit pignon d'entrée, qui présente sur sa face radialement interne une denture et qui se prolonge, coaxialement et dans la direction opposée audit pignon d'entrée, par un arbre de sortie,
- des pignons étagés équirépartis circonférentiellement qui comportent une première et une seconde parties de denture de diamètres différents, ladite première partie de denture étant en contact avec ladite denture de la couronne fixe, ladite seconde partie de denture étant en contact avec ladite denture de la couronne de sortie, ledit pignon d'entrée étant en contact avec ladite première partie de denture ou ladite seconde partie de denture.

Le dispositif de réduction comporte en outre des moyens interposés entre lesdits pignons étagés qui sont adaptés pour maintenir les positions relatives desdits pignons étagés les uns par rapport aux autres, lesdits pignons étagés roulant sur lesdits moyens interposés. De plus, le plan transversal, situé à mi-distance axiale de la zone de coopération de ladite seconde partie de denture desdits pignons étagés avec ladite couronne de sortie, est situé à une à une distance axiale par rapport à ladite première partie de denture desdits pignons étagés sensiblement égale à 80% de la longueur axiale de ladite seconde partie de denture desdits pignons étagés.

Ainsi, comme on le verra plus en détails par la suite dans la description, les moyens interposés, en contact simultané avec les pignons étagés, permettent de compenser les efforts tangentiels de dentures et les couples de basculement radial et orthoradial. On améliore ainsi de manière significative les performances du dispositif de réduction que ce soit son rendement, sa durée de vie ou son confort (sonore) d'utilisation.

De préférence, mais facultativement, le dispositif de réduction selon l'invention présente une ou plusieurs des caractéristiques suivantes, prises seules ou en combinaison :
- l'angle de pression de fonctionnement entre ladite seconde partie de denture et ladite couronne de sortie est élevé, de préférence sensiblement égal à 28° ;
- une couronne souple de maintien encercle lesdits pignons étagés, de préférence uniquement au niveau de leur seconde partie de denture ;
- la longueur axiale de ladite première partie de denture desdits pignons étagés est réduite ;
- l'angle de pression de fonctionnement entre ladite seconde partie de denture et ledit pignon fou est faible, de préférence sensiblement égal à 20° ;
- lesdits pignons étagés sont montés libres en rotation sur des tourillons montés sur un porte satellites ;
- le dispositif de réduction est dépourvu de tourillons de support des pignons étagés, et de porte satellites ;
- lesdits moyens interposés sont en contact uniquement avec ladite première partie de denture desdits pignons étagés ;
- lesdits moyens interposés sont en contact uniquement avec ladite seconde partie de denture desdits pignons étagés ;
- lesdits moyens interposés comportent au moins un élément fou en rotation disposé de manière sensiblement coaxiale audit pignon d'entrée ;
- ledit élément fou comporte un pignon fou disposé de manière sensiblement coaxiale audit pignon d'entrée ;
- lesdits pignons étagés comportent, entre lesdites premières et secondes parties de denture, une partie dépourvue de denture, ledit élément fou en rotation comportant au moins un galet en contact uniquement avec ladite partie dépourvue de denture ; et
- lesdits moyens interposés sont réalisés par ledit pignon d'entrée.

L'invention se rapporte également à un actionneur d'embrayage et à un actionneur de boîte de vitesses remarquables en ce qu'ils comprennent un dispositif de réduction tel que décrit ci-avant.

D'autres caractéristiques et avantages de l'invention apparaîtront à l'examen de la description de modes de réalisation préférés qui va suivre, présentés uniquement à titre d'exemples illustratifs et non limitatifs, en référence aux figures ci-annexées sur lesquelles :
- la figure 1 représente en perspective partiellement arrachée un dispositif de réduction du type à trains épicycloïdaux imbriqués connu ;
- la figure 2 représente en perspective partiellement arrachée un dispositif de réduction du type à trains épicycloïdaux imbriqués selon un premier mode de réalisation préféré de l'invention ;
- la figure 3 représente une vue en coupe transversale du dispositif de réduction représenté à la figure 2 ;
- la figure 4 représente en perspective un dispositif de réduction qui ne fait pas partie de l'invention,
   coupé selon un plan axial ;
- la figure 5 représente en perspective partiellement arrachée un dispositif de réduction du type à trains épicycloïdaux imbriqués qui ne fait pas partie de l'invention; et
- la figure 6 représente en perspective partiellement arrachée un dispositif de réduction du type à trains épicycloïdaux imbriqués selon un second mode de réalisation préféré de l'invention.

Dans la suite de la description, les éléments identiques ou de fonction identique sont repérés, sauf mention contraire, par la même référence numérique.

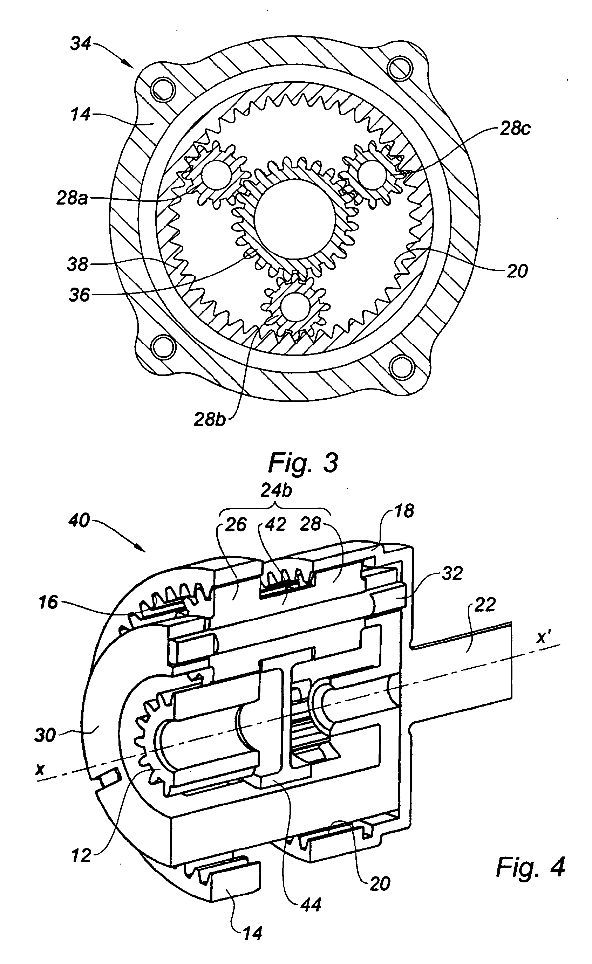

On se réfère désormais aux figures 2 et 3, sur lesquelles est représenté un dispositif de réduction 34 du type à trains épicycloïdaux imbriqués selon un premier mode de réalisation préféré de l'invention.

Ce dispositif de réduction 34 comprend notamment :
- un pignon d'entrée 12 apte à être entraîné en rotation autour de son axe x-x',
- une couronne fixe 14, coaxiale au pignon d'entrée 12 et qui présente sur sa face radialement interne une denture 16,
- une couronne de sortie 18 coaxiale au pignon d'entrée 12, qui présente sur sa face radialement interne une denture 20 (voir figure 2) et qui se prolonge, selon l'axe x-x' dans la direction opposée au pignon d'entrée 12, par un arbre de sortie 22,
- trois satellites réalisés sous forme de pignons étagés 24a, 24b, 24c (voir figure 2) équirépartis circonférentiellement, qui comportent chacun une première et une seconde parties de denture, 26a, 26b, 26c et 28a, 28b, 28c (voir figure 2) respectivement, de diamètres différents.

La première partie de denture 26a, 26b, 26c est en contact simultanément avec le pignon d'entrée 12 et la denture 16 de la couronne fixe 14, tandis que la seconde partie de denture 28a, 28b, 28c est en contact avec la denture 20 de la couronne de sortie 18.

Les pignons étagés 24a, 24b, 24c roulent sur un élément fou en rotation, en l'espèce un pignon fou 36, disposé de manière sensiblement coaxiale au pignon d'entrée 12. Idéalement, comme cela est représenté sur les figures 2 et 3, le pignon fou 36 est en contact uniquement avec la seconde partie de denture 28a, 28b, 28c des pignons étagés 24a, 24b, 24c.

Ce pignon fou 36 maintient l'entraxe entre les pignons étagés 24a, 24b, 24c et le parallélisme entre les axes de ces pignons.

Cependant, il est intéressant d'assurer le plaquage des pignons étagés 24a, 24b, 24c sur le pignon fou 36. Ceci peut avantageusement être réalisé en adoptant une, ou de préférence plusieurs des mesures décrites ci-après.

L'angle de pression de fonctionnement entre la seconde partie de denture 28a, 28b, 28c et le pignon fou 36 est faible, idéalement sensiblement égal à 20°, de manière à résister au couple de basculement qui tend à écarter les pignons étagés 24a, 24b, 24c du pignon fou 36.

L'angle de pression de fonctionnement entre la seconde partie de denture 28a, 28b, 28c et la denture 20 de la couronne de sortie 18 est élevé, de préférence sensiblement égal à 28°.

Le plan transversal P, situé à mi-distance axiale de la zone de coopération de la seconde partie de denture 28a, 28b, 28c avec la couronne de sortie 18, est situé à une distance axiale L1 par rapport à la première partie de denture 26a, 26b, 26c sensiblement égale à 80 % de la longueur axiale L2 de la seconde partie de denture 28a, 28b, 28c.

Une couronne souple 38 de maintien est montée sans jeu par rapport aux pignons étagés 24a, 24b, 24c qu'elle encercle, idéalement uniquement au niveau de leur seconde partie de denture 28a, 28b, 28c. Cette couronne souple 38 facilite de plus le montage du dispositif de réduction 34 en maintenant les éléments imbriqués.

La longueur axiale de la première partie de denture 26a, 26b, 26c des pignons étagés 24a, 24b, 24c est réduite pour limiter le couple de basculement autour d'un axe orthoradial.

En particulier, la couronne souple 38 montée sans jeu « initie » le placage des pignons étagés 24a, 24b, 24c sur le pignon fou 36 lorsque le dispositif de réduction ne transmet pas de couple. Cette couronne souple 38 permet également de lutter contre les forces centrifuges en cours de fonctionnement, en particulier à vide.

Par rapport à un dispositif de réduction connu en soi tel que représenté à la figure 1, le dispositif de réduction selon le premier mode de réalisation de l'invention présente, en outre, l'avantage de comporter moins de pièces et moins de pièces différentes.

En effet, le dispositif de réduction de l'état de la technique comporte trois pignons étagés, un porte satellites (éventuellement en deux parties), trois tourillons de support des pignons étagés, ainsi qu'une couronne d'entrée, un pignon d'entrée et une couronne de sortie, voire, éventuellement, trois ou six paliers à monter entre les tourillons et le porte satellites. Ce dispositif comporte donc entre dix et dix-sept pièces qui correspondent à entre six et huit références de pièces différentes.

Le dispositif de réduction selon le premier mode de réalisation de l'invention comporte pour sa part simplement entre sept et huit pièces qui correspondent à entre cinq et six références de pièces différentes. Le dispositif comporte donc un nombre de pièces moins important, ce qui induit une réduction du coût de fabrication. Par ailleurs, sa nomenclature comporte moins de références, ce qui permet là encore une réduction du coût du dispositif de réduction par rapport au dispositif connu.

Le dispositif selon l'invention présente par ailleurs, par rapport au dispositif connu, l'avantage de pouvoir être facilement monté, de supprimer le problème d'arrêt axial des tourillons de support des pignons étagés et les problèmes de lubrification des paliers de support.

On notera enfin que les pignons étagés peuvent être réalisés pleins par moulage, ce qui permet une réalisation de pignons étagés de taille réduite, avec des cotes moins précises et donc une fabrication moins onéreuse, ou creux de manière à réduire l'inertie de ces pignons étagés.

Enfin, il a été constaté qu'avec un tel dispositif de réduction, on obtenait un meilleur rendement qu'avec un train de type connu, notamment du fait de l'élimination du passage par des paliers (tourillons ici) des composantes de couple radiale et orthoradiale s'exerçant sur les pignons étagés. Cette amélioration du rendement peut également s'expliquer par l'absence des tourillons de support des pignons étagés et du porte satellites qui implique l'élimination du frottement de ces tourillons sur le porte satellites.

On se réfère désormais à la figure 4 sur laquelle est représenté en perspective un dispositif de réduction 40 , coupé selon un plan axial.

Ce dispositif de réduction 40 se différencie du dispositif de réduction 34 des figures 2 et 3 en ceci qu'il comporte des pignons étagés 24 réalisés de telle sorte que les premières parties de denture 26 et seconde parties de denture 28 sont espacées et reliées par une partie lisse 42 dépourvue de denture.

Contrairement au mode de réalisation représenté aux figures 2 et 3, les pignons étagés 24 roulent sur un galet lisse 44 monté fou en rotation, et non sur un pignon fou, les pignons étagés 24 prenant appui sur le galet lisse 44 au niveau de leur partie lisse 42 dépourvue de denture.

Ce galet lisse 44 est disposé entre les pignons étagés 24 de manière à reprendre les efforts de séparation de denture, ce galet lisse 44 étant en contact uniquement avec la partie lisse 42 des pignons étagés 24.

De plus, de manière optionnelle, les pignons étagés 24 peuvent, comme cela est représenté sur la figure 4, être montés en rotation de manière connue en soi au moyen de tourillons 32 montés à rotation sur un porte satellites 30 qui peut éventuellement être réalisé en deux demi porte satellites de manière connue soi. Les tourillons peuvent être montés soit dans des encoches en « U » de manière à permettre un montage depuis le côté, soit dans des trous percés dans le porte satellites.

Bien entendu, d'autres modes de réalisation des pignons fous 24 sont ici envisageables. On peut ainsi concevoir de réaliser plusieurs parties lisses coopérant chacune avec un ou plusieurs galets lisses, un mode de réalisation préféré correspondant au cas où deux galets lisses sont mis en oeuvre. Par ailleurs, la position de ces parties lisses peut également être modifiée. On peut ainsi concevoir que ces parties lisses soient réalisées de part et d'autre de la première ou de la seconde partie de denture. On peut également concevoir de réaliser une partie lisse divisant la seconde partie de denture en deux.

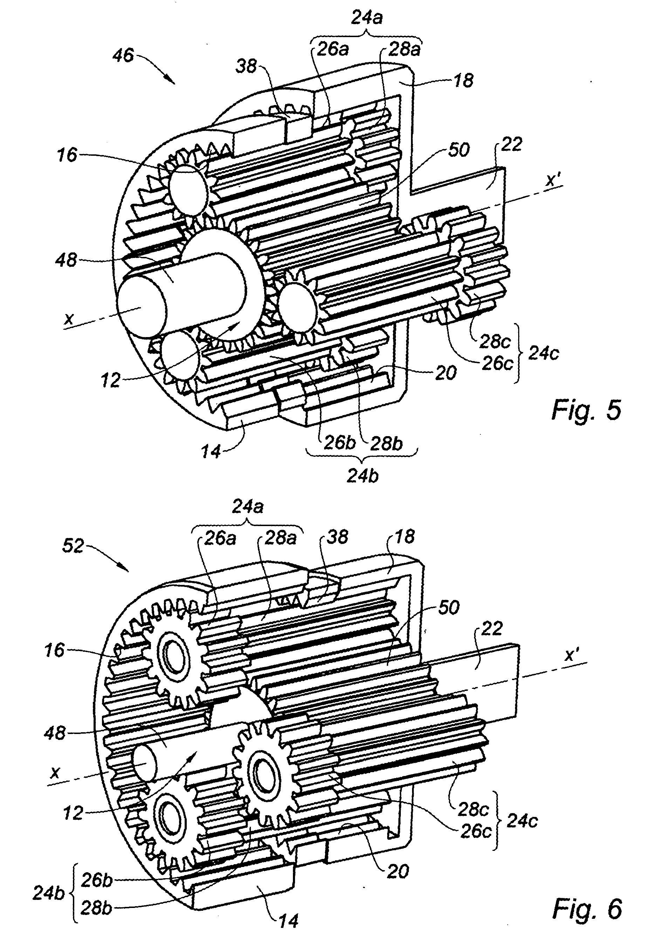

On se réfère maintenant à la figure 5 sur laquelle est représenté un dispositif de réduction 46. Ce dispositif de réduction 46 diffère du dispositif de réduction 34 selon le premier mode de réalisation préféré de l'invention du fait que le pignon d'entrée 12 assure non seulement l'entraînement des pignons étagés 24a, 24b, 24c mais également le maintien de ces pignons étagés 24a, 24b, 24c, dans leurs positions relatives. Notamment, le pignon 12 maintient l'entraxe entre les pignons étagés 24a, 24b, 24c et le parallélisme entre les axes de ces pignons.

Pour ce faire, le pignon 12 mis en oeuvre dans ce dispositif de réduction comporte une partie lisse 48 et une partie de denture 50 de longueur sensiblement égale à la longueur de la première partie de denture 26a, 26b, 26c des pignons étagés 24a, 24b, 24c, cette première partie de denture étant plus longue que la seconde partie de denture 28a, 28b, 28c.

Idéalement, la longueur de cette première partie de denture 26a, 26b, 26c est telle que le plan transversal situé à mi-distance axiale de la zone de coopération de la première partie de denture 26a, 26b, 26c avec la couronne d'entrée fixe 14, est situé à une distance axiale par rapport à la seconde partie de denture 28a, 28b, 28c sensiblement égale à 80 % de la longueur axiale de la première partie de denture 26a, 26b, 26c.

Le second mode de réalisation préféré de l'invention 52 représenté à la figure 6 diffère du dispositif de la figure 5 fait que la partie de denture 50 du pignon d'entrée 12 est en contact avec la seconde partie de denture 28a, 28b, 28c des pignons étagés 24a, 24b, 24c. Ici, la partie de denture 50 du pignon d'entrée 12 est de longueur sensiblement égale à la longueur de la seconde partie de denture 28a, 28b, 28c des pignons étagés 24a, 24b, 24c, cette seconde partie de denture 28a, 28b, 28c étant plus longue que la première partie de denture 26a, 26b, 26c.

Idéalement, la longueur de cette seconde partie de denture 28a, 28b, 28c est telle que le plan transversal situé à mi-distance axiale de la zone de coopération de la seconde partie de denture 28a, 28b, 28c avec la couronne de sortie 18, est situé à une distance axiale par rapport à la première partie de denture 26a, 26b, 26c sensiblement égale à 80 % de la longueur axiale de la seconde partie de denture 28a, 28b, 28c.

Le second mode de réalisation du dispositif de réduction selon l'invention présente notamment l'avantage de réduire encore le nombre de pièces constitutives du dispositif de réduction et donc son coût.

Les dispositifs de réduction selon l'invention, représentés sur les figures 2, 3 et 6 peuvent notamment être mis en oeuvre dans un dispositif d'actionneur d'embrayage ou dans un dispositif d'actionneur de boîte de vitesses du fait de leur grande gamme de rapports de réductions, de leur encombrement réduit et de leur très bon rendement.

Bien entendu, l'invention ne se réduit pas aux exemples de modes de réalisation décrits ci-avant et de nombreuses variantes sont possibles sans sortir du cadre de l'invention.

Notamment, on peut envisager de monter les pignons étagés du dispositif selon le premier, ou le second mode de réalisation préféré au moyen d'un porte satellites et de tourillons.

Par ailleurs, la couronne souple 38 peut être réalisée sous forme d'une courroie lisse ou crantée, d'une bague lisse ou même d'un tore. Cette couronne souple 38 peut être maintenue en place axialement au moyen d'une gorge pratiquée dans la première ou la seconde partie de denture des pignons étagés, respectivement.

## Revendications

1. Dispositif de réduction du type à trains épicycloïdaux imbriqués (34 ; 40 ; 46 ; 52) comprenant :
- un pignon d'entrée (12) apte à être entraîné en rotation autour de son axe,
- une couronne fixe (14), coaxiale audit pignon d'entrée (12) et qui présente sur sa face radialement interne une denture (16),
- une couronne de sortie (18) coaxiale audit pignon d'entrée (12), qui présente sur sa face radialement interne une denture (20) et qui se prolonge, coaxialement et dans la direction opposée audit pignon d'entrée (12), par un arbre de sortie (22),
- des pignons étagés (24a, 24b, 24c) équirépartis circonférentiellement qui comportent une première et une seconde parties de denture (26a, 26b, 26c, 28a, 28b, 28c) de diamètres différents, ladite première partie de denture (26a, 26b, 26c) étant en contact avec ladite denture (16) de la couronne fixe (14), ladite seconde partie de denture (28a, 28b, 28c) étant en contact avec ladite denture (20) de la couronne de sortie (18), ledit pignon d'entrée (12) étant en contact avec ladite première partie de denture (26a, 26b, 26c) ou ladite seconde partie de denture (28a, 28b, 28c),
- des moyens interposés entre lesdits pignons étagés (24a, 24b, 24c), qui sont adaptés pour maintenir les positions relatives desdits pignons étagés (24a, 24b, 24c) les uns par rapport aux autres, lesdits pignons étagés (24a, 24b, 24c) roulant sur lesdits moyens interposés,
**caractérisé en ce que** le plan transversal (P), situé à mi-distance axiale de la zone de coopération de ladite seconde partie de denture (28a, 28b, 28c) desdits pignons étagés (24a, 24b, 24c) avec ladite couronne de sortie (18), est situé à une distance axiale (L1) par rapport à ladite première partie de denture (26a, 26b, 26c) desdits pignons étagés (24a, 24b, 24c) sensiblement égale à 80% de la longueur axiale (L2) de ladite seconde partie de denture (28a, 28b, 28c) desdits pignons étagés (24a, 24b, 24c).

2. Dispositif de réduction selon la revendication 1, **caractérisé en ce que** l'angle de pression de fonctionnement entre ladite seconde partie de denture (28a, 28b, 28c) et ladite couronne de sortie (18) est sensiblement égal à 28°.

3. Dispositif de réduction selon l'une des revendications précédentes, **caractérisé en ce qu'**une couronne souple (38) de maintien encercle lesdits pignons étagés (24a, 24b, 24c), de préférence uniquement au niveau de leur seconde partie de denture (28a, 28b, 28c).

4. Dispositif de réduction selon l'une quelconque des revendications précédentes, **caractérisé en ce que** la longueur axiale de ladite première partie de denture (26a, 26b, 26c) desdits pignons étagés (24a, 24b, 24c) est inférieure à celle de la seconde partie de denture (28a, 28b, 28c).

5. Dispositif de réduction selon l'une quelconque des revendications précédentes, **caractérisé en ce que** le dispositif comprend un pignon fou (36), coaxialement avec le pignon d'entrée (12) et en contact avec lesdites secondes parties de denture, et **en ce que** l'angle de pression de fonctionnement entre ladite seconde partie de denture (28a, 28b, 28c) et ledit pignon fou (36) est sensiblement égal à 20°.

6. Dispositif de réduction selon l'une quelconque des revendications précédentes, **caractérisé en ce que** lesdits pignons étagés (24a, 24b, 24c) sont montés libres en rotation sur des tourillons (32) montés sur un porte satellites (30).

7. Dispositif de réduction selon l'une quelconque des revendications 1 à 5, **caractérisé en ce qu'**il est dépourvu de tourillons de support des pignons étagés, et de porte satellites.

8. Dispositif de réduction selon l'une quelconque des revendications précédentes, **caractérisé en ce que** lesdits moyens interposés sont en contact uniquement avec ladite première partie de denture (26a, 26b, 26c) desdits pignons étagés (24a, 24b, 24c).

9. Dispositif de réduction selon l'une quelconque des revendications 1 à 7, **caractérisé en ce que** lesdits moyens interposés sont en contact uniquement avec ladite seconde partie de denture (28a, 28b, 28c) desdits pignons étagés (24a, 24b, 24c).

10. Dispositif de réduction selon l'une quelconque des revendications précédentes, **caractérisé en ce que** lesdits moyens interposés comportent au moins un élément fou en rotation (36 ; 44) disposé de manière sensiblement coaxiale audit pignon d'entrée (12).

11. Dispositif selon la revendication précédente, **caractérisé en ce que** ledit élément fou comporte un pignon fou (36) disposé de manière sensiblement coaxiale audit pignon d'entrée (12).

12. Dispositif de réduction selon la revendication 10, **caractérisé en ce que** lesdits pignons étagés (24a, 24b, 24c) comportent, entre lesdites premières et secondes parties de denture (26a, 26b, 26c, 28a, 28b, 28c), une partie dépourvue de denture (42), ledit élément fou en rotation comportant au moins un galet (44) en contact uniquement avec ladite partie dépourvue de denture (42).

13. Dispositif de réduction selon l'une quelconque des revendications 1 à 9, **caractérisé en ce que** lesdits moyens interposés sont réalisés par ledit pignon d'entrée (12).

14. Actionneur d'embrayage **caractérisé en ce qu'**il comporte un dispositif de réduction selon l'une quelconque des revendications précédentes.

15. Actionneur de boîte de vitesses **caractérisé en ce qu'**il comporte un dispositif de réduction selon l'une quelconque des revendications 1 à 13.

## Claims

1. Reduction device of the imbricated planetary gear train type (34; 40; 46; 52) comprising:
- an intake pinion (12) which can be rotated around its axis;
- a fixed ring (14), which is coaxial to the said intake pinion (12), and has toothing (16) on its radially inner surface;
- an output ring (18) which is coaxial to the said intake pinion (12), and has toothing (20) on its radially inner surface, and is extended, coaxially, and in the direction opposite the said intake pinion (12), by an output shaft (22);
- stepped pinions (24a, 24b, 24c) which are circumferentially equally distributed, and comprise a first and a second toothing part (26a, 26b, 26c, 28a, 28b, 28c) with different diameters, the said first toothing part (26a, 26b, 26c) being in contact with the said toothing (16) of the fixed ring (14), the said second toothing part (28a, 28b, 28c) being in contact with the said toothing (20) of the output ring (18), the said intake pinion (12) being in contact with the said first toothing part (26a, 26b, 26c) or the said second toothing part (28a, 28b, 28c); and
- means which are interposed between the said stepped pinions (24a, 24b, 24c), and are designed to maintain the relative positions of the said stepped pinions (24a, 24b, 24c) in relation to one another, the said stepped pinions (24a, 24b, 24c) rolling on the said interposed means,
**characterised in that** the transverse plane (P) which is situated at the axial mid-point of the area of co-operation of the said second toothing part (28a, 28b, 28c) of the said stepped pinions (24a, 24b, 24c) with the said output ring (18) is situated at an axial distance (L1) relative to the said first toothing part (26a, 26b, 26c) of the said stepped pinions (24a, 24b, 24c), which is substantially equal to 80% of the axial length (L2) of the said second toothing part (28a, 28b, 28c) of the said stepped pinions (24a, 24b, 24c).

2. Reduction device according to claim 1, **characterised in that** the functioning pressure angle between the said second toothing part (28a, 28b, 28c) and the said output ring (18) is substantially equal to 28°.

3. Reduction device according to one of the preceding claims, **characterised in that** a flexible retention ring (38) encircles the said stepped pinions (24a, 24b, 24c) preferably only at the level of their second toothing part (28a, 28b, 28c).

4. Reduction device according to any one of the preceding claims, **characterised in that** the axial length of the said first toothing part (26a, 26b, 26c) of the said stepped pinions (24a, 24b, 24c) is less than that of the second toothing part (28a, 28b, 28c).

5. Reduction device according to any one of the preceding claims, **characterised in that** the device comprises an idle pinion (36) coaxially to the intake pinion (12) and in contact with the said second toothing parts, and **in that** the functioning pressure angle between the said second toothing part (28a, 28b, 28c) and the said idle pinion (36) is substantially equal to 20°.

6. Reduction device according to any one of the preceding claims, **characterised in that** the stepped pinions (24a, 24b, 24c) are fitted such as to rotate freely on journals (32) which are fitted on a satellite-holder (30).

7. Reduction device according to any one of claims 1 to 5, **characterised in that** it is without journals to support stepped pinions, and satellite holders.

8. Reduction device according to any one of the preceding claims, **characterised in that** the said interposed means are in contact only with the said first toothing part (26a, 26b, 26c) of the said stepped pinions (24a, 24b, 24c).

9. Reduction device according to any one of claims 1 to 7, **characterised in that** the said interposed means are in contact only with the said second toothing part (28a, 28b, 28c) of the said stepped pinions (24a, 24b, 24c).

10. Reduction device according to any one of the preceding claims, **characterised in that** the said interposed means comprise at least one element (36; 44) which is idle in rotation, and is disposed substantially coaxially to the said intake pinion (12).

11. Reduction device according to the preceding claim, **characterised in that** the said idle element comprises an idle pinion (36) which is disposed substantially coaxially to the said intake pinion (12).

12. Reduction device according to claim 10, **characterised in that** the said stepped pinions (24a, 24b, 24c) comprise, between the said first and second toothing parts (26a, 26b, 26c, 28a, 28b, 28c) a part (42) which is without toothing, the said element which is idle in rotation comprising at least one roller (44) which is in contact only with the said part (42) which is without toothing.

13. Reduction device according to any one of claims 1 to 9, **characterised in that** the said interposed means are constituted by the said intake pinion (12).

14. Clutch actuator, **characterised in that** it comprises a reduction device according to any one of the preceding claims.

15. Gearbox actuator, **characterised in that** it comprises a reduction device according to any one of claims 1 to 13.

## Patentansprüche

1. Untersetzungsvorrichtung von der Art mit ineinander greifenden Planetentrieben (34; 40; 46; 52) mit
- einem Antriebszahnrad (12), das geeignet ist, um seine Achse drehangetrieben zu werden,
- einem zu dem Antriebszahnrad (12) koaxialen festen Hohlrad (14), das auf seiner radial internen Seite eine Verzahnung (16) aufweist,
- einem zu dem Antriebszahnrad (12) koaxialen Abtriebshohlrad (18), das auf seiner radial internen Seite eine Verzahnung (20) aufweist und koaxial und in der zu dem Antriebszahnrad (12) entgegengesetzten Richtung durch eine Abtriebswelle (22) fortgesetzt wird,
- Stufenzahnrädern (24a, 24b, 24c), die umlaufend gleichmäßig verteilt sind und einen ersten und einen zweiten Verzahnungsbereich (26a, 26b, 26c, 28a, 28b, 28c) mit unterschiedlichem Durchmesser aufweisen, wobei der erste Verzahnungsbereich (26a, 26b, 26c) in Kontakt mit der Verzahnung (16) des festen Hohlrads (14) steht, wobei der zweite Verzahnungsbereich (28a, 28b, 28c) in Kontakt mit der Verzahnung (20) des Abtriebshohlrads (18) steht, wobei das Antriebszahnrad (12) in Kontakt mit dem ersten Verzahnungsbereich (26a, 26b, 26c) oder mit dem zweiten Verzahnungsbereich (28a, 28b, 28c) steht,
- Mitteln, die zwischen den Stufenzahnrädern (24a, 24b, 24c) angeordnet sind und geeignet sind, um die relativen Positionen der Stufenzahnräder (24a, 24b, 24c) zueinander aufrechtzuerhalten, wobei die Stufenzahnräder (24a, 24b, 24c) auf den genannten zwischenangeordneten Mitteln rollen,
**dadurch gekennzeichnet, dass** die Querebene (P), die sich axial in der Mitte des Bereichs befindet, in dem der zweite Verzahnungsbereich (28a, 28b, 28c) der Stufenzahnräder (24a, 24b, 24c) und das Abtriebshohlrad (18) zusammenarbeiten, von dem ersten Verzahnungsbereich (26a, 26b, 26c) der Stufenzahnräder (24a, 24b, 24c) um einen axialen Abstand (L1) beabstandet ist, der im Wesentlichen 80 % der axialen Länge (L2) des zweiten Verzahnungsbereichs (28a, 28b, 28c) der Stufenzahnräder (24a, 24b, 24c) entspricht.

2. Untersetzungsvorrichtung nach Anspruch 1, **dadurch gekennzeichnet, dass** der Betriebsdruckwinkel zwischen dem zweiten Verzahnungsbereich (28a, 28b, 28c) und dem Abtriebshohlrad (18) in etwa 28° beträgt.

3. Untersetzungsvorrichtung nach einem der vorhergehenden Ansprüche, **dadurch gekennzeichnet, dass** ein flexibles Haltehohlrad (38) die Stufenzahnräder (24a, 24b, 24c) vorzugsweise nur an deren zweitem Verzahnungsbereich (28a, 28b, 28c) umschließt.

4. Untersetzungsvorrichtung nach einem der vorhergehenden Ansprüche, **dadurch gekennzeichnet, dass** die axiale Länge des ersten Verzahnungsbereichs (26a, 26b, 26c) der Stufenzahnräder (24a, 24b, 24c) kleiner ist als diejenige des zweiten Verzahnungsbereichs (28a, 28b, 28c).

5. Untersetzungsvorrichtung nach einem der vorhergehenden Ansprüche, **dadurch gekennzeichnet, dass** die Vorrichtung ein zu dem Antriebszahnrad (12) koaxiales und in Kontakt mit den zweiten Verzahnungsbereichen stehendes Freilaufzahnrad (36) umfasst und dass der Betriebsdruckwinkel zwischen dem zweiten Verzahnungsbereich (28a, 28b, 28c) und dem Freilaufzahnrad (36) in etwa 20° beträgt.

6. Untersetzungsvorrichtung nach einem der vorhergehenden Ansprüche, **dadurch gekennzeichnet, dass** die Stufenzahnräder (24a, 24b, 24c) frei drehend auf Zapfen (32) gelagert sind, welche auf einem Planetenträger (30) montiert sind.

7. Untersetzungsvorrichtung nach einem der Ansprüche 1 bis 5, **dadurch gekennzeichnet, dass** sie keine Zapfen zur Lagerung der Stufenzahnräder und keinen Planetenträger aufweist.

8. Untersetzungsvorrichtung nach einem der vorhergehenden Ansprüche, **dadurch gekennzeichnet, dass** die zwischenangeordneten Mittel nur mit dem ersten Verzahnungsbereich (26a, 26b, 26c) der Stufenzahnräder (24a, 24b, 24c) in Kontakt stehen.

9. Untersetzungsvorrichtung nach einem der Ansprüche 1 bis 7, **dadurch gekennzeichnet, dass** die zwischenangeordneten Mittel nur mit dem zweiten Verzahnungsbereich (28a, 28b, 28c) der Stufenzahnräder (24a, 24b, 24c) in Kontakt stehen.

10. Untersetzungsvorrichtung nach einem der vorhergehenden Ansprüche, **dadurch gekennzeichnet, dass** die zwischenangeordneten Mittel mindestens ein frei drehbares Element (36; 44) umfassen, das in etwa koaxial zu dem Antriebszahnrad (12) angeordnet ist.

11. Vorrichtung nach dem vorhergehenden Anspruch, **dadurch gekennzeichnet, dass** das frei drehbare Element ein Freilaufzahnrad (36) umfasst, das in etwa koaxial zu dem Antriebszahnrad (12) angeordnet ist.

12. Untersetzungsvorrichtung nach Anspruch 10, **dadurch gekennzeichnet, dass** die Stufenzahnräder (24a, 24b, 24c) zwischen den ersten und zweiten Verzahnungsbereichen (26a, 26b, 26c, 28a, 28b, 28c) einen Bereich ohne Verzahnung (42) aufweisen, wobei das frei drehbare Element mindestens eine Rolle (44) umfasst, die nur mit dem verzahnungslosen Bereich (42) in Kontakt steht.

13. Untersetzungsvorrichtung nach einem der Ansprüche 1 bis 9, **dadurch gekennzeichnet, dass** die zwischenangeordneten Mittel durch das Antriebszahnrad (12) gebildet sind.

14. Kupplungsaktuator, **dadurch gekennzeichnet, dass** er eine Untersetzungsvorrichtung nach einem der vorhergehenden Ansprüche umfasst.

15. Getriebeaktuator, **dadurch gekennzeichnet, dass** er eine Untersetzungsvorrichtung nach einem der Ansprüche 1 bis 13 umfasst.
